# EUROPÄISCHE PATENTSCHRIFT

(11) **EP 3 074 649 B1**
(45) Veröffentlichungstag und Bekanntmachung des Hinweises auf die Patenterteilung: **27.12.2017**
(21) Anmeldenummer: 14802410.2
(22) Anmeldetag: 20.11.2014
(51) Int. Cl.: F16C 29/12, F16C 29/02

(54) **ABSTANDSHALTER FÜR EINE GLEITFÜHRUNG UND HUBSÄULE**
SPACER FOR A SLIDING GUIDE AND LIFTING POST
ÉLÉMENT D'ESPACEMENT POUR UN GUIDE COULISSANT ET ÉLÉVATEUR À COLONNE

(30) Priorität: 28.11.2013 DE 202013105425 U
(43) Veröffentlichungstag der Anmeldung: 05.10.2016
(73) Patentinhaber: RK Rose + Krieger GmbH Verbindungs- und Positioniersysteme, 32423 Minden (DE)
(72) Erfinder: HEINZEL, Bernd, 32457 Porta Westfalica (DE); PALM, Dieter, 33824 Werther (DE)
(74) Vertreter: Dantz, Jan Henning
(86) Internationale Anmeldenummer: PCT/EP2014/075148
(87) Internationale Veröffentlichungsnummer: WO 2015/078765

(56) Entgegenhaltungen:
- EP-A2- 0 142 069
- AT-U1- 7 093
- DE-C- 856 717
- DE-U1- 29 911 865
- US-A1- 2006 115 324

## Beschreibung

Die vorliegende Erfindung betrifft einen Abstandshalter für eine Gleitführung, insbesondere für eine Hubsäule, mit einem Halter, an dem mindestens ein Verstellelement in eine Längsrichtung bewegbar gehalten ist, wobei an dem Halter und/oder dem Verstellelement mindestens eine zu der Längsrichtung geneigte Kontaktfläche vorgesehen ist, so dass durch eine Bewegung des Verstellelementes relativ zu dem Halter in die Längsrichtung die Dicke der Einheit aus Halter und Verstellelement veränderbar ist, und eine Hubsäule.

Die EP 2 372 172 offenbart eine Vorrichtung zur Herstellung eines Abstandes zwischen zwei Profilen, die ein Gleitlager ausbildet. Die Vorrichtung umfasst zwei relativ zueinander bewegbare Teile, die zur Einstellung eines Abstandes verschiebbar sind und in einer gewünschten Position aneinander verrastet werden. Das Verrasten der Teile zur Herstellung eines Abstandes erleichtert zwar die Montage, allerdings ist es nicht möglich, nachträglich eine Anpassung vorzunehmen. Wurden die Klemmkräfte an der Gleitführung zu hoch eingestellt, ist es nicht möglich, den Abstand zu reduzieren, um die Gleitführung wieder leichtgängig zu machen. Vielmehr muss die Vorrichtung vollständig ausgetauscht werden.

Es ist daher Aufgabe der vorliegenden Erfindung, einen Abstandshalter für eine Gleitführung zu schaffen, der einen kompakten Aufbau besitzt und ein nachträgliches Einstellen des Abstandes ermöglicht.

Diese Aufgabe wird mit einem Abstandshalter mit den Merkmalen des Anspruches 1 gelöst.

Erfindungsgemäß ist an dem Halter ein erster Anker montiert und an dem Verstellelement ein zweiter Anker montiert, die über einen Gewindebolzen miteinander verbunden sind und durch Drehen des Gewindebolzen das Verstellelement relativ zu dem Halter in die Längsrichtung durch den ersten und zweiten Anker bewegbar ist. Dadurch kann über den Gewindebolzen eine feine Verstellung vorgenommen werden, um eine Dickenänderung der Einheit aus Halter und Verstellelement vorzunehmen. Die Verstellbewegung kann auch nachträglich vorgenommen werden. Bei der Verstellbewegung kann sowohl das Verstellelement stationär oder der Halter stationär angeordnet sein, wobei es auch möglich ist, sowohl den Halter als auch das Verstellelement zu bewegen.

Vorzugsweise ist der erste Anker an einer Aufnahme des Halters und der zweite Anker an einer Aufnahme des Verstellelementes drehfest um eine Längsachse des Gewindebolzens gehalten und um eine Achse senkrecht zur Längsachse des Gewindebolzens verschwenkbar. Dadurch kann durch Drehen des Gewindebolzens der Halter und/oder das Verstellelement bewegt werden. Für eine einfache Montage kann der erste Anker und/oder der zweite Anker an der zugehörigen Aufnahme an dem Halter oder dem Verstellelement verrastet oder klemmend festgelegt sein. Dadurch kann eine Vorfixierung des Ankers mit dem Gewindebolzen an der entsprechenden Aufnahme erfolgen.

Gemäß einer weiteren Ausgestaltung weist der erste und/oder der zweite Anker ein Innengewinde auf, das in Eingriff mit einem Gewinde des Gewindebolzens steht. Der Gewindebolzen kann dabei mindestens zwei Gewindeabschnitte aufweisen, wobei ein erster Gewindeabschnitt ein Rechtsgewinde und ein zweiter Gewindeabschnitt ein Linksgewinde ist. Der erste Gewindeabschnitt kann dann mit dem ersten oder zweiten Anker in Eingriff stehen, während der zweite Gewindeabschnitt mit dem anderen der beiden Anker in Eingriff steht. Durch Drehen des Gewindebolzens in eine Richtung wird dann der Abstand der Anker vergrößert oder verkleinert.

Für eine kompakte Bauweise kann der erste und/oder zweite Anker als zylindrischer oder tonnenförmiger Bolzen ausgebildet sein. Die Längsachse des Bolzens kann dabei rechtwinklig zu der Längsachse des Gewindebolzens ausgerichtet sein. Bei Einsatz eines zylindrischen oder tonnenförmigen Bolzens besteht der Vorteil, dass der Gewindebolzen beim Verstellvorgang um die Längsachse des als Bolzen ausgebildeten Ankers verschwenkt werden kann.

Das Verstellelement ist vorzugsweise plattenförmig mit einer glatten Oberfläche ausgebildet, die als Gleitfläche dienen kann. Auf der zur glatten Oberfläche gegenüberliegenden Seite kann eine Aufnahme für den zweiten Anker und eine Rille vorgesehen sein, in die der Gewindebolzen zumindest teilweise eingefügt ist, so dass sich ein sehr flacher Aufbau ergibt. Der Halter kann ebenfalls einen plattenförmigen Abschnitt mit einer im Wesentlichen glatten Oberfläche aufweisen, wobei in einer glatten Oberfläche bei Bedarf auch Aussparungen vorgesehen sind. Auf der zu der glatten Oberfläche gegenüberliegenden Seite ist eine Aufnahme für den Anker sowie eine Rille vorgesehen, in die der Gewindebolzen zumindest teilweise eingefügt ist.

Vorzugsweise sind an dem Halter mehrere Verstellelemente unabhängig voneinander bewegbar gelagert. Dadurch kann der Halter ein Profil winkelförmig oder U-förmig umgreifen, so dass an unterschiedlichen Anlageflächen der Abstand zu einem äußeren Profil eingestellt werden kann. Für eine leichtgängige Führung durch den Abstandshalter können der Halter und/oder das Verstellelement aus Kunststoff hergestellt sein, so dass umgebende Profile aus Metall leichtgängig geführt sind.

Für eine exakte Führung des mindestens einen Verstellelementes an dem Halter kann mindestens eine Rippe und eine nutförmige Führung, vorzugsweise zwei parallele Rippen und zwei nutförmige Führungen vorgesehen sein, wobei die Rippe wahlweise an dem Halter oder dem Verstellelement angeformt sein kann und die nutförmige Führung an dem anderen Bauteil vorgesehen ist.

Erfindungsgemäß wird auch eine Hubsäule mit einem ersten Profil und einem in dem ersten Profil angeordneten zweiten Profil bereitgestellt, wobei in dem Spalt zwischen dem ersten Profil und dem zweiten Profil mindestens ein erfindungsgemäßer Abstandshalter angeordnet ist. Der Abstandshalter ist dabei so in dem Spalt zwischen den beiden Profilen positioniert, dass eine Stirnseite eines Gewindebolzens für einen Verstellvorgang zugänglich angeordnet ist, was auch eine nachträgliche Verstellung des Abstandes zwischen den beiden Profilen ermöglicht.

Die Erfindung wird nachfolgend anhand eines Ausführungsbeispiels mit Bezug auf die beigefügten Zeichnungen näher erläutert. Es zeigen:

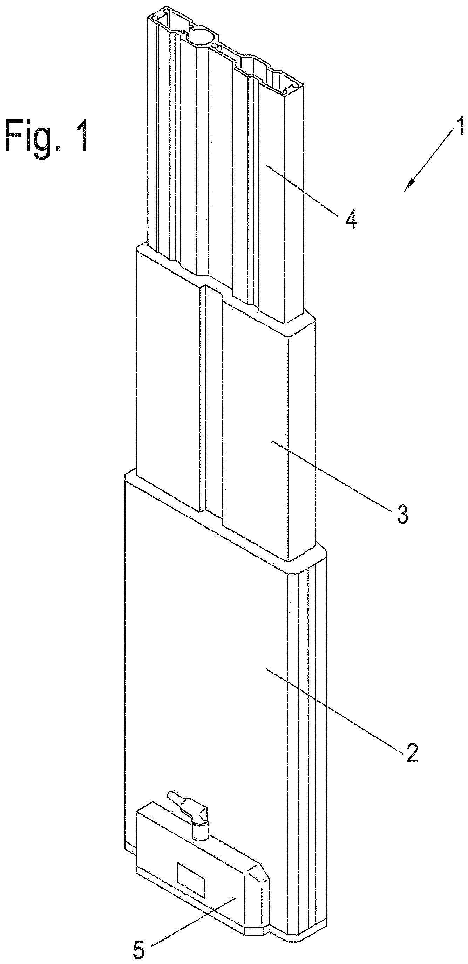

- Figur 1: eine perspektivische Ansicht einer Hubsäule;
- Figur 2: eine perspektivische Ansicht der Hubsäule der Figur 1 in eingefahrenem Zustand;
- Figur 3: eine perspektivische Explosionsdarstellung eins Abstandshalters für die Hubsäule der Figur 1, und
- Figur 4: eine perspektivische Ansicht des Abstandshalters der Figur 3 in einer zusammengebauten Position.

Eine Hubsäule 1 umfasst ein äußeres Profil 2, ein mittleres Profil 3 und ein inneres Profil 4. Das innere Profil 4 sowie das mittlere Profil 3 können relativ zu dem äußeren Profil 2 über einen Antrieb 5 bewegt werden, wobei zwischen den Profilen 2, 3 und 4 jeweils eine Gleitführung vorgesehen ist.

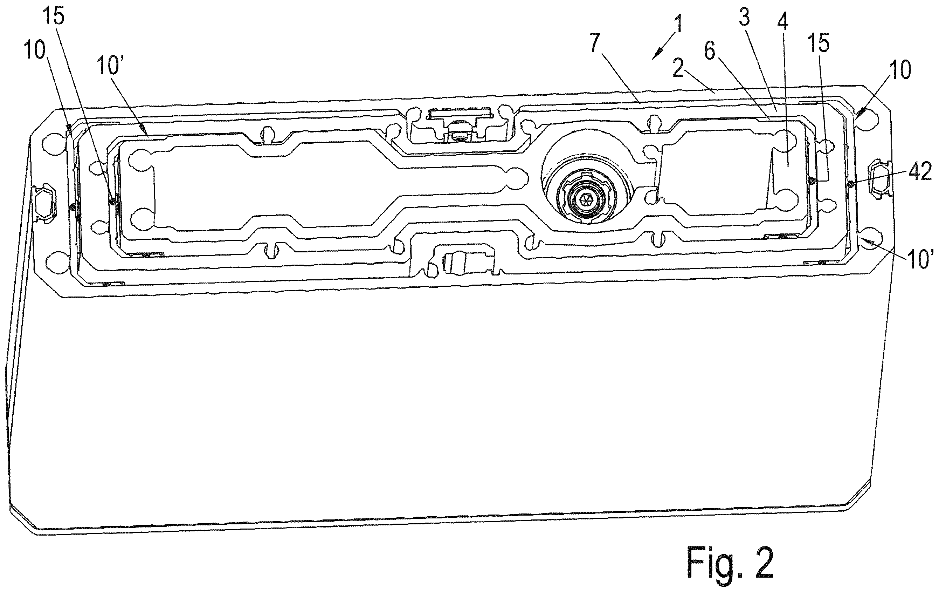

Wie in Figur 2 gezeigt ist, befindet sich zwischen dem äußeren Profil 2 und dem mittleren Profil 3 ein Spalt 7, in dem an einer Stirnseite ein U-förmiger Abstandshalter 10 montiert ist. An dem Abstandshalter 10 ist eine Stirnseite mit einer Profilierung 42 eines Gewindebolzens zugänglich angeordnet, mittels der ein Abstand zwischen dem mittleren Profil 3 und dem äußeren Profil 2 eingestellt werden kann.

Auf ähnliche Weise ist zwischen dem inneren Profil 4 und dem mittleren Profil 3 ein Spalt 6 ausgebildet, wobei in dem Spalt 6 zwei U-förmige Abstandshalter 10' positioniert sind, bei denen eine Stirnseite eines Gewindebolzens 15 zugänglich angeordnet ist. Die Profile 2, 3, 4 sind im Querschnitt im Wesentlichen rechteckförmig als Hohlprofile ausgebildet, wobei auch andere Profilgeometrien möglich sind.

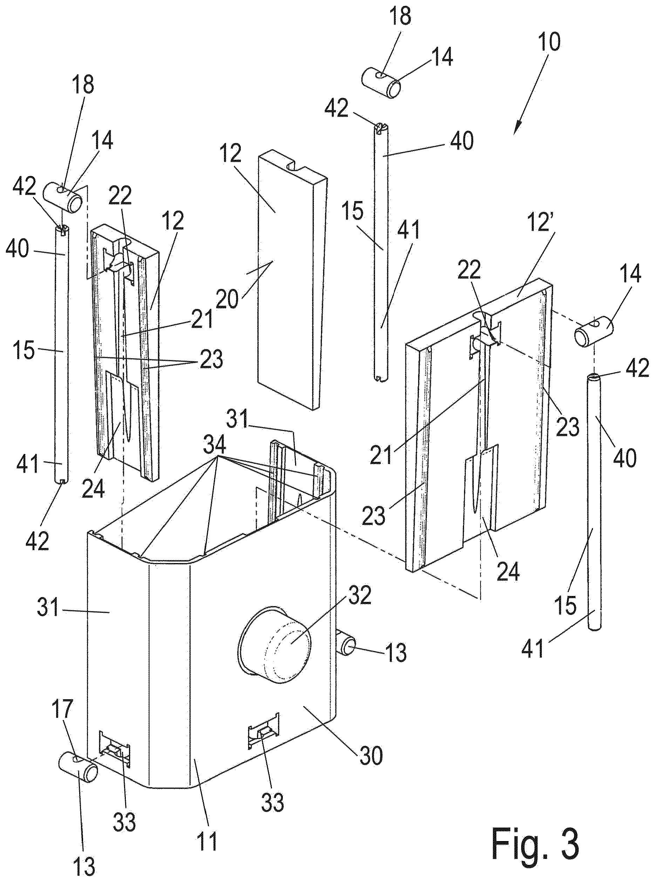

In Figur 3 ist ein Abstandshalter 10 im Detail gezeigt, der zwischen den Profilen 2, 3 und 4 eingesetzt werden kann, wobei die Größe der Abstandshalter variiert werden kann, um in dem äußeren Spalt 7 oder dem inneren Spalt 6 eingesetzt zu werden. Die Bauform der Abstandshalter 10 oder 10' kann im Übrigen gleich sein.

Der Abstandshalter 10 umfasst einen U-förmig ausgebildeten Halter 11, der zwei Schenkel 31 aufweist, die über einen Boden 30 miteinander verbunden sind. Die Außenflächen des Bodens 30 und der Schenkel 31 sind im Wesentlichen als glatte Oberflächen ausgebildet, wobei an dem Boden 30 ein Mittel zur Fixierung am äußeren Profil 2 in Form eines hervorstehenden Zapfens 32 angeformt ist. Auch andere Profilierungen oder Mittel zur Befestigung des Halters 11 können vorgesehen sein.

An den Schenkeln 31 und dem Boden 30 ist jeweils eine Aufnahme 33 zur Fixierung eines Ankers 13 ausgebildet. Der Anker 13 wird dabei von der Innenseite montiert und an den Aufnahmen 33 verrastet oder klemmend festgelegt. Der Anker 13 ist als zylindrischer oder tonnenförmiger Bolzen ausgebildet, der mit einem Innengewinde 17 ausgestattet ist, wobei die Längsachse des Bolzens im Wesentlichen rechtwinklig zur Längsachse des Innengewindes 17 verläuft.
An den beiden Schenkeln 31 ist jeweils ein Verstellelement 12 verschiebbar gehalten, während an dem Boden 30 ein Verstellelement 12' verschiebbar gehalten ist. Das Verstellelement 12' ist breiter ausgebildet als die Verstellelemente 12, besitzt allerdings dieselbe Funktion wie die Verstellelemente 12.
Jedes Verstellelement 12 oder 12' umfasst eine Aufnahme 22, in die ein Anker 14 in Form eines Bolzens eingefügt ist. Der Anker 14 kann dabei in der Aufnahme 22 verrastet oder klemmend festgelegt sein. In dem Anker 14 ist ein Innengewinde 18 ausgebildet, dessen Längsachse im Wesentlichen senkrecht zu der Achse des Bolzens des Ankers 14 ausgerichtet ist.

Ferner besitzt das Verstellelement 12 oder 12' eine glatte Oberfläche 20, die als Gleitfläche ausgebildet ist, wobei an der Oberfläche 20 bei Bedarf auch Aussparungen vorgesehen sein können. Auf der zu der glatten Oberfläche 20 gegenüberliegenden Seite umfasst das Verstellelement 12 die Aufnahme 22 für den Anker 14 sowie eine Rille 21, in der ein Gewindebolzen 15 zumindest teilweise aufgenommen werden kann. Zudem ist an einem Ende der Rille 21 eine Gleitfläche 24 in Form einer Aussparung vorgesehen, an der der Anker 13 des Halters 11 geführt ist.
Jedes Verstellelement 12 und 12' umfasst ferner zwei seitlich angeordnete Rippen 23, die an nutförmigen Führungsflächen 34 an dem Halter 11 verschiebbar sind. Es ist auch möglich, andere Führungsflächen statt Rippen 23 an den Verstellelementen 12 vorzusehen, die an Kontaktflächen des Halters 11 entlang gleiten können.
Die Profile 2, 3 und 4 der Hubsäule 1 werden in eine Längsrichtung verfahren, und der Abstandshalter 10 soll den Abstand zwischen den Profilen 2, 3 und 4 einstellen. Hierfür sind die Verstellelemente 12 und 12' relativ zu dem Halter 11 verstellbar ausgebildet. Der Gewindebolzen 15 umfasst einen ersten Gewindeabschnitt 40 und einen zweiten Gewindeabschnitt 41, die mit unterschiedlicher Drehrichtung ausgebildet sind, also kann der Gewindeabschnitt 40 beispielsweise als Rechtsgewinde ausgebildet sein, während der Gewindeabschnitt 41 als Linksgewinde ausgebildet ist, oder umgekehrt. Der Anker 14 ist auf den Gewindeabschnitt 40 aufgeschraubt, während der Anker 13 auf den Gewindeabschnitt 41 aufgeschraubt ist. An den Stirnseiten des Gewindebolzens 15 ist eine Profilierung 42 in Form eines Schlitzes vorgesehen, die eine Verstellung des Verstellelementes 12 relativ zu dem Halter 11 ermöglicht. Auch andere Profilierungen 42 können für den Eingriff eines Werkzeuges an der Stirnseite vorgesehen werden.

In der montierten Position wird der Halter 11 ortsfest an dem äußeren Profil 2 festgelegt, wobei hierfür der Zapfen 32 in eine entsprechende Öffnung des Profils 2 eingesteckt wird. Durch Drehen des Gewindebolzens 15 kann nun der Abstand der Anker 13 und 14 verändert werden, so dass dadurch das Verstellelement 12 relativ zu dem Halter 11 bewegt wird.

Die Führungsflächen 34 und die Rippen 23 des Verstellelementes 12 sind allerdings nicht parallel zu der ebenen Oberfläche 20 ausgerichtet, sondern die Rippen 23 sind in einem Winkel zu der Oberfläche 20 angeordnet, der beispielsweise in einem Bereich zwischen 1° und 6°, insbesondere 2° bis 4°, liegt.

An dem Halter 11 sind für das jeweilige Verstellelement 12 oder 12' ebenfalls Führungsflächen 34 ausgebildet, die nicht parallel zu einer äußeren Oberfläche des Halters 11 ausgerichtet sind, sondern keilförmig verlaufen. Die Führungsflächen 34 an dem Halter 11 können zu der gegenüberliegenden benachbarten Außenfläche des Halters 11 ebenfalls in einem Winkel zwischen 1° und 6°, insbesondere 2° bis 4°, ausgerichtet sein.

Durch eine Bewegung der Verstellelemente 12 oder 12' in Längsrichtung der Profile 2, 3, 4 wird somit die Dicke der Einheit aus Halter 11 und der Verstellelemente 12 geändert.

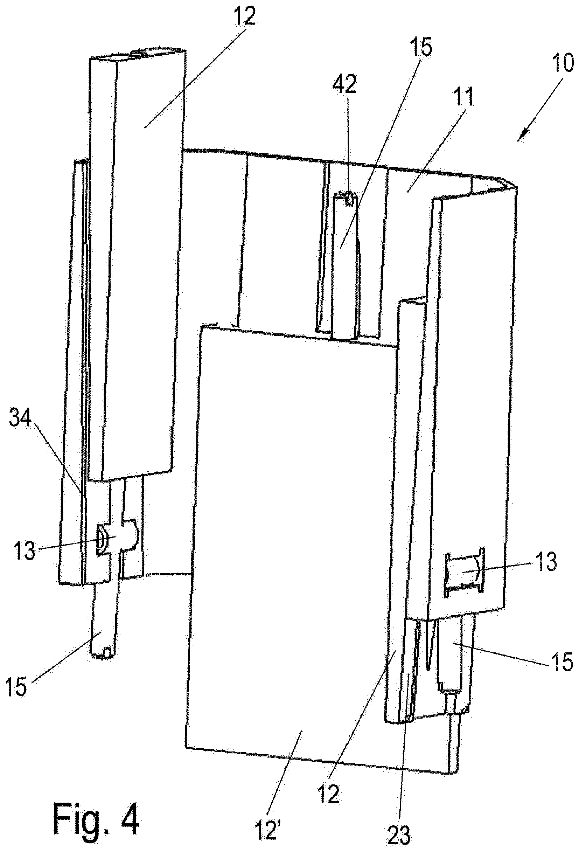

In Figur 4 ist das Verstellelement 12 in einer zusammengesetzten Position gezeigt. Über die Gewindebolzen 15 kann jedes Verstellelement 12 und 12' in der gewünschten Position angeordnet werden, um die Dicke der Einheit aus Verstellelement 12 oder 12' und dem Halter 11 einzustellen. Dadurch kann eine Gleitführung zwischen den Profilen 2, 3, 4 optimal ausgerichtet werden. Die Stirnseiten mit der Profilierung 42 an dem Gewindebolzen 15 sind dabei von außen zugänglich angeordnet, so dass auch ein nachträgliches Verstellen möglich ist.

In dem dargestellten Ausführungsbeispiel sind die Führungsflächen zwischen den Verstellelementen 12 und dem Halter 11 als Rippen 23 und rillenförmige Führungsflächen 34 ausgebildet. Es ist natürlich auch möglich, andere keilförmige Führungsflächen zwischen dem Verstellelement 12 und dem Halter 11 vorzusehen.

Der Halter 11 und die Verstellelemente 12 und 12' bestehen vorzugsweise aus Kunststoff, wobei über den Abstandshalter 10 ein direkter Kontakt der meist aus Metall bestehenden Profile 2, 3 und 4 vermieden wird. Der Gewindebolzen 15 und die Anker 13 können aus Metall hergestellt sein, um auch größere Kräfte beim Verstellvorgang aufbringen zu können.

### Bezugszeichenliste

- 1: Hubsäule
- 2: Profil
- 3: Profil
- 4: Profil
- 5: Antrieb
- 6: Spalt
- 7: Spalt
- 10, 10': Abstandshalter
- 11: Halter
- 12: Verstellelement
- 13: Anker
- 14: Anker
- 15: Gewindebolzen
- 17: Innengewinde
- 18: Innengewinde
- 20: Oberfläche
- 21: Rille
- 22: Aufnahme
- 23: Rippe
- 24: Gleitfläche
- 30: Boden
- 31: Schenkel
- 32: Zapfen
- 33: Aufnahme
- 34: Führungsfläche
- 40: Gewindeabschnitt
- 41: Gewindeabschnitt
- 42: Profilierung

## Patentansprüche

1. Abstandshalter (10) für eine Gleitführung, insbesondere für eine Hubsäule (1), mit einem Halter (11), an dem mindestens ein Verstellelement (12, 12') in eine Längsrichtung bewegbar gehalten ist, wobei an dem Halter (11) und/oder dem Verstellelement (12, 12') mindestens eine zu der Längsrichtung geneigte Kontaktfläche (23, 34) vorgesehen ist, so dass durch eine Bewegung des Verstellelementes (12, 12') relativ zu dem Halter (11) in die Längsrichtung die Dicke der Einheit aus Halter (11) und Verstellelement (12, 12') veränderbar ist, **dadurch gekennzeichnet, dass** an dem Halter (11) ein erster Anker (13) montiert ist und an dem Verstellelement (12, 12') ein zweiter Anker (14) montiert ist, die über einen Gewindebolzen (15) miteinander verbunden sind, und durch Drehen des Gewindebolzens (15) das Versstellelement (12, 12') relativ zu dem Halter (11) in die Längsrichtung durch den ersten und zweiten Anker (13, 14) bewegbar ist.

2. Abstandshalter nach Anspruch 1, **dadurch gekennzeichnet, dass** der erste Anker (13) an einer Aufnahme (33) des Halters (11) und der zweite Anker (14) an einer Aufnahme (22) des Verstellelementes (12, 12') drehfest um eine Längsachse des Gewindebolzens (15) gehalten ist und um eine Achse senkrecht zur Längsachse des Gewindebolzens (15) verschwenkbar ist.

3. Abstandshalter nach Anspruch 2, **dadurch gekennzeichnet, dass** der erste Anker (13) an einer Aufnahme (33) des Halters (11) und/oder der zweite Anker (14) an einer Aufnahme (22) des Verstellelementes (12, 12') verrastet oder klemmend festgelegt ist und um eine Achse senkrecht zur Längsachse des Gewindebolzens (15) verschwenkbar ist.

4. Abstandshalter nach einem der vorhergehenden Ansprüche, **dadurch gekennzeichnet, dass** der erste und/oder der zweite Anker (13, 14) ein Innengewinde aufweist, das in Eingriff mit einem Gewinde des Gewindebolzens (15) steht.

5. Abstandshalter nach Anspruch 4, **dadurch gekennzeichnet, dass** der Gewindebolzen (15) mindestens zwei Gewindeabschnitte (40, 41) aufweist, und ein erster Gewindeabschnitt (40) ein Rechtsgewinde und ein zweiter Gewindeabschnitt (41) ein Linksgewinde ist.

6. Abstandshalter nach einem der vorhergehenden Ansprüche, **dadurch gekennzeichnet, dass** der erste und/oder zweite Anker (13, 14) als zylindrischer oder tonnenförmiger Bolzen ausgebildet ist, der mit seiner Längsachse senkrecht zu der Längsachse des Gewindebolzens (15) ausgerichtet ist.

7. Abstandshalter nach einem der vorhergehenden Ansprüche, **dadurch gekennzeichnet, dass** das Verstellelement (12, 12') plattenförmig mit einer glatten Oberfläche ausgebildet ist und auf der zu der glatten Oberfläche (20) gegenüberliegenden Seite eine Aufnahme (22) für den zweiten Anker (14) und eine Rille (21) vorgesehen sind, in die der Gewindebolzen (15) zumindest teilweise eingefügt und geführt ist.

8. Abstandshalter nach einem der vorhergehenden Ansprüche, **dadurch gekennzeichnet, dass** der Halter (11) einen plattenförmigen Abschnitt mit einer im Wesentlichen glatten Oberfläche aufweist und auf der zu der glatten Oberfläche gegenüberliegenden Seite eine Aufnahme (33) für den ersten Anker (13) und eine Rille vorgesehen sind, in die der Gewindebolzen (15) zumindest teilweise eingefügt und geführt ist.

9. Abstandshalter nach einem der vorhergehenden Ansprüche, **dadurch gekennzeichnet, dass** an dem Halter (11) mehrere Verstellelemente (12, 12') unabhängig voneinander bewegbar gehalten sind.

10. Abstandshalter nach einem der vorhergehenden Ansprüche, **dadurch gekennzeichnet, dass** der Halter (11) winkelförmig oder U-förmig ausgebildet ist.

11. Abstandshalter nach einem der vorhergehenden Ansprüche, **dadurch gekennzeichnet, dass** der Halter (11) und/oder das Verstellelement (12, 12') aus Kunststoff hergestellt sind.

12. Abstandshalter nach einem der vorhergehenden Ansprüche, **dadurch gekennzeichnet, dass** zur Führung des mindestens einen Verstellelementes (12, 12') an dem Halter (11) mindestens eine Rippe (23) und eine nutförmige Führung (34), vorzugsweise zwei parallele Rippen (23) und zwei nutförmige Führungen (34) vorgesehen sind.

13. Hubsäule (1) mit einem ersten Profil (2, 3) und einem in dem ersten Profil (2, 3) angeordneten zweiten Profil (3, 4), **dadurch gekennzeichnet, dass** in einem Spalt (6, 7) zwischen dem ersten Profil (2, 3) und dem zweiten Profil (3, 4) mindestens ein Abstandshalter (10) nach einem der vorhergehenden Ansprüche vorgesehen ist.

14. Hubsäule nach Anspruch 13, **dadurch gekennzeichnet, dass** der Gewindebolzen (15) mit einer Stirnseite in dem Spalt (6, 7) zwischen dem ersten Profil (2, 3) und dem zweiten Profil (3, 4) von außen zugänglich angeordnet ist.

15. Hubsäule nach Anspruch 13 oder 14, **dadurch gekennzeichnet, dass** an dem Halter (11) des Abstandshalters (11) eine nach außen hervorstehende Profilierung (32) vorgesehen ist, mittels der der Halter (11) an dem Profil (2) fixiert ist.

## Claims

1. Spacer (10) for a sliding guide, in particular for a lifting column (1), having a holder (11) on which at least one adjusting element (12, 12') is retained such that it can be moved in the longitudinal direction, wherein at least one contact surface (23, 24), which is inclined in relation to the longitudinal direction, is provided on the holder (11) and/or the adjusting element (12, 12'), such that, by means of a movement of the adjusting element (12, 12') relative to the holder (11) in the longitudinal direction, the thickness of the unit comprising holder (11) and adjusting element (12, 12') can be changed, **characterized in that** a first anchor (13) is mounted on the holder (11) and a second anchor (14) is mounted on the adjusting element (12, 12'), being connected to each other via a threaded bolt (15), and, by means of rotating the threaded bolt (15), the adjusting element (12, 12') can be moved relative to the holder (11) in the longitudinal direction by means of the first and second anchor (13, 14).

2. Spacer according to Claim 1, **characterized in that** the first anchor (13) is retained on a receptacle (33) of the holder (11) and the second anchor (14) is retained on a receptacle (22) of the adjusting element (12, 12') so as to be fixed against rotation about the longitudinal axis of the threaded bolt (15) and can be pivoted about an axis perpendicular to the longitudinal axis of the threaded bolt (15).

3. Spacer according to Claim 2, **characterized in that** the first anchor (13) is retained in a latching or clamping manner on a receptacle (33) of the holder (11) and/or the second anchor (14) is retained in a latching or clamping manner on a receptacle (22) of the adjusting element (12, 12') and can be pivoted about an axis perpendicular to the longitudinal axis of the threaded bolt (15).

4. Spacer according to one of the preceding claims, **characterized in that** the first and/or the second anchor (13, 14) has an internal thread which meshes with a thread of the threaded bolt (15).

5. Spacer according to Claim 4, **characterized in that** the threaded bolt (15) has at least two threaded sections (40, 41), and a first threaded section (40) is a right-hand thread and a second threaded section (41) is a left-hand thread.

6. Spacer according to one of the preceding claims, **characterized in that** the first and/or second anchor (13, 14) is formed as a cylindrical or barrel-shaped bolt, which is aligned with its longitudinal axis perpendicular to the longitudinal axis of the threaded bolt (15).

7. Spacer according to one of the preceding claims, **characterized in that** the adjusting element (12, 12') is plate-shaped with a smooth surface and, on the side located opposite the smooth surface (20), a receptacle (22) for the second anchor (14) and a groove (21) are provided, into which the threaded bolt (15) is at least partly inserted and guided.

8. Spacer according to one of the preceding claims, **characterized in that** the holder (11) has a plate-shaped section with a substantially smooth surface and, on the side located opposite the smooth surface, a receptacle (33) for the first anchor (13) and a groove are provided, into which the threaded bolt (15) is at least partly inserted and guided.

9. Spacer according to one of the preceding claims, **characterized in that** a plurality of adjusting elements (12, 12') are retained on the holder (11) such that they can be moved independently of one another.

10. Spacer according to one of the preceding claims, **characterized in that** the holder (11) is formed so as to be angled or U-shaped.

11. Spacer according to one of the preceding claims, **characterized in that** the holder (11) and/or the adjusting element (12, 12') is/are produced from plastic.

12. Spacer according to one of the preceding claims, **characterized in that** in order to guide the at least one adjusting element (12, 12') on the holder (11), at least one rib (23) and a groove-shaped guide (34), preferably two parallel ribs (23) and two groove-shaped guides (34), are provided.

13. Lifting column (1) having a first profile (2, 3) and a second profile (3, 4) arranged in the first profile (2, 3), **characterized in that** at least one spacer (10) according to one of the preceding claims is provided in a gap (6, 7) between the first profile (2, 3) and the second profile (3, 4).

14. Lifting column according to Claim 13, **characterized in that** the threaded bolt (15) is arranged with one end in the gap (6, 7) between the first profile (2, 3) and the second profile (3, 4) so as to be accessible from outside.

15. Lifting column according to Claim 13 or 14, **characterized in that** a profiled section (32) projecting outwards, by means of which the holder (11) is fixed to the profile (2), is provided on the holder (11) of the spacer (11).

## Revendications

1. Elément d'écartement (10) destiné à un guidage à glissement, en particulier à une colonne de levage (1) comportant un support (11) sur lequel est maintenu au moins un élément de réglage (12, 12') mobile en direction longitudinale, sur le support (11) et/ ou l'élément de réglage (12, 12') étant prévue au moins une surface de contact (23, 34) inclinée par rapport à la direction longitudinale, de sorte qu'un déplacement de l'élément de réglage (12, 12') par rapport au support (11) dans la direction longitudinale entraîne une modification de l'épaisseur de l'unité constituée par le support (11) et l'élément de réglage (12, 12'),
**caractérisé en ce que**
sur le support (11) est montée une première pièce de blocage (13), et sur l'élément de réglage (12, 12') est montée une seconde pièce de blocage (14), ces pièces de blocage étant reliées par un boulon fileté (15), et suite à la rotation du boulon fileté (15) l'élément de réglage (12, 12') peut être déplacé par rapport au support (11) dans la direction longitudinale par la première et la seconde pièce de blocage (13, 14).

2. Elément d'écartement conforme à la revendication 1,
**caractérisé en ce que**
la première pièce de blocage (13) et la seconde pièce de blocage (14) sont respectivement montées dans un logement de réception (33) du support (11) et dans un logement de réception (22) de l'élément de réglage (12, 12'), fixes en rotation autour de l'axe longitudinal du boulon fileté (15) et susceptibles de pivoter autour d'un axe perpendiculaire à l'axe longitudinal du boulon fileté (15).

3. Elément d'écartement conforme à la revendication 2,
**caractérisé en ce que**
la première pièce de blocage (13) et/ou la seconde pièce de blocage (14) sont respectivement encliquetées ou bloquées dans un logement de réception (33) du support (11) et/ou dans un logement de réception (22) de l'élément de réglage (12, 12'), et susceptibles de pivoter autour d'un axe perpendiculaire à l'axe longitudinal du boulon fileté (15).

4. Elément d'écartement conforme à l'une des revendications précédentes,
**caractérisé en ce que**
la première pièce de blocage et/ou la seconde pièce de blocage (13, 14) comporte(nt) un filetage interne qui vient en prise avec le filetage du boulon fileté (15).

5. Elément d'écartement conforme à la revendication 4,
**caractérisé en ce que**
le boulon fileté (15) comporte au moins deux segments filetés (40, 41), et un premier segment fileté (40) est un filetage à filet à droite tandis que le second filetage (41) est un filetage à filet à gauche.

6. Elément d'écartement conforme à l'une des revendications précédentes,
**caractérisé en ce que**
la première pièce de blocage (13) et/ou la seconde pièce de blocage (14) est(sont) sont réalisée(s) sous la forme d'un(de) boulon(s) cylindrique(s) ou en forme de tonneau(x) orienté(s) perpendiculairement à l'axe longitudinal du boulon fileté (15) par son(leur) axe(s) longitudinal(ux).

7. Elément d'écartement conforme à l'une des revendications précédentes,
**caractérisé en ce que**
l'élément de réglage (12, 12') est réalisé sous la forme d'une plaque ayant une surface lisse, et, sur la face opposée à la surface lisse (20) sont prévus un logement de réception (22) de la seconde pièce de blocage (14) ainsi qu'une rainure (21) dans laquelle le boulon fileté (15) est au moins partiellement inséré et guidé.

8. Elément d'écartement conforme à l'une des revendications précédentes,
**caractérisé en ce que**
le support (11) comporte un segment en forme de plaque ayant une surface essentiellement lisse, et, sur la face opposée à la surface lisse sont prévus un logement de réception (33) de la première pièce de blocage (13) ainsi qu'une rainure dans laquelle le boulon fileté (15) est au moins partiellement inséré et guidé.

9. Elément d'écartement conforme à l'une des revendications précédentes,
**caractérisé en ce que**
sur le support (11) sont maintenus plusieurs éléments de réglage (12, 12') mobiles indépendamment les uns des autres.

10. Elément d'écartement conforme à l'une des revendications précédentes,
**caractérisé en ce que**
le support (11) a une forme angulaire ou est en forme de U.

11. Elément d'écartement conforme à l'une des revendications précédentes,
**caractérisé en ce que**
le support (11) et/ou l'élément de réglage (12, 12') est(sont) réalisé(s) en matériau synthétique.

12. Elément d'écartement conforme à l'une des revendications précédentes,
**caractérisé en ce que**
pour permettre le guidage de l'élément de réglage (12, 12') il est prévu, sur le support (11), au moins une nervure (23) et un guidage (34) en forme de rainure, de préférence deux nervures parallèles (23) et deux guidages en forme de rainures parallèles (34).

13. Colonne de levage comportant un premier profil (2, 3) et un second profil (3, 4) situé dans le premier profil (2, 3),
**caractérisée en ce qu'**
il est prévu, dans l'intervalle (6, 7), situé entre le premier profil (2, 3) et le second profil (3, 4) au moins un élément d'écartement (10) conforme à l'une des revendications précédentes.

14. Colonne de levage conforme à la revendication 13,
**caractérisée en ce que**
le boulon fileté (15) est monté de façon à pouvoir être accessible de l'extérieur par une face frontale dans l'intervalle (6, 7) situé entre le premier profil (2, 3) et le second profil (3, 4).

15. Colonne de levage conforme à la revendication 13 ou 14,
**caractérisée en ce qu'**
**en ce qu'**il est prévu sur le support (11) de l'élément d'écartement (10) un profilage (32) faisant saillie vers l'extérieur au moyen duquel le support (11) est fixé au profil (2).
